# EUROPEAN PATENT APPLICATION

(11) **EP 4 599 672 A1**
(43) Date of publication of application: **13.08.2025**
(21) Application number: 23946420.9
(22) Date of filing: 01.11.2023
(51) Int. Cl.: A01K 7/02, A01K 7/00

(54) **PET WATER DISPENSER**

(30) Priority: 21.07.2023 CN 202321934322 U
(71) Applicant: Pet Gravity (Hangzhou) Technology Co., Ltd, Hangzhou, Zhejiang 310000 (CN)
(72) Inventor: WANG, Lijun, Hangzhou, Zhejiang 310000 (CN); CAO, Xianfu, Hangzhou, Zhejiang 310000 (CN)
(74) Representative: Valet Patent Services Limited
(86) International application number: PCT/CN2023/129036
(87) International publication number: WO 2025/020341

(57) **Abstract**

A pet water dispenser relates to the technical field of water dispensers. The pet water dispenser includes a first box body (1), a water pump (2), a drinking basin (3), and a driving mechanism (4). The first box body (1) is provided with a first space (11) that can accommodate clean water. One end of the water pump (2) is communicated to the first space (11), and the other end thereof is communicated to the drinking basin (3). The water pump (2) is configured to pump water in the first space (11) into the drinking basin (3). The driving mechanism (4) is connected to the drinking basin (3), and the driving mechanism (4) is configured to drive the drinking basin (3) to rotate in a vertical direction to pour out the water in the drinking basin (3). This device solves a technical problem of separating clean wastewater from the existing pet water dispensers.

## Description

### TECHNICAL FIELD

The present disclosure relates to the field of water dispenser technologies, and in particular, to a pet water dispenser.

### BACKGROUND

With the advancement of technology and the development of culture, there are more and more people who keep pets, and people are paying more attention to the feeling of pets drinking water. In terms of pet drinking water, there are also water dispensers specifically designed for pets. The existing water dispensers are mostly for circulating filtered water, which cannot completely filter microorganisms, bacteria, food debris, secretions, etc. brought by pets when drinking water, which results in pets constantly drinking sewage. Therefore, there is an urgent need for a pet water dispenser that can achieve clean sewage separation to solve the problem of pets' drinking water health.

### SUMMARY

In view of this, this utility model provides a pet water dispenser for solving the technical problem of separating clean water from existing pet water dispensers.

In order to solve the above technical problems, a first technical solution adopted by this utility model is as follows.

A pet water dispenser, including a first box body, a water pump, a drinking basin, and a driving mechanism; where the first box body is provided with a first space configured to accommodate clean water; one end of the water pump is communicated to the first space, and the other end thereof is communicated to the drinking basin; the water pump is configured to pump water in the first space into the drinking basin, the driving mechanism is connected to the drinking basin, and the driving mechanism is configured to drive the drinking basin to rotate in a vertical direction so as to pour out the water in the drinking basin.

In some embodiments of the pet water dispenser, the driving mechanism includes a driving element and a rotating component, the driving element is connected to the rotating component, and the driving element is configured to drive the rotating component to rotate so as to drive the drinking basin to rotate in the vertical direction through the rotating component; a first hole penetrating the rotating component is provided at an axis of the rotating component along an axis direction of the rotating component, and the drinking basin is clamped to the rotating component and communicated to the first hole;
the water pump is communicated to the first hole and communicated to the drinking basin through the first hole.

In some embodiments of the pet water dispenser, the rotating component has at least a first position corresponding to the water basin that is able to accommodate water and a second position corresponding to the water basin that is able to pour out water in a rotation path of the rotating component, the rotating component is capable of being reciprocated between the first position and the second position under a drive of the driving element;
the driving mechanism further includes a position detection component, and the position detection component is connected in communication with the driving element and is capable of transmitting a signal that the rotating component is rotated to the first and second positions, to the driving element.

In some embodiments of the pet water dispenser, the position detection component includes a sensing element, a first position detection element, and a second position detection element, the sensing element is connected to the rotating component so as to rotate with the rotating component, and the sensing element has at least a third position corresponding to the first position and a fourth position corresponding to the second position in the rotation path;
the first position detection element and the second position detection element are both connected in communication with the driving element; the first position detection element is capable of detecting that the sensing element has been located at the third position and transmitting a signal indicating that the sensing element has been located at the third position to the driving element; the second position detection element is capable of detecting that the sensing element has been located at the fourth position and transmitting a signal indicating that the sensing element has been located at the fourth position to the driving element.

In some embodiments of the pet water dispenser, the pet water dispenser further includes a first water level detection component, and the first water level detection component is configured to detect a water level in the first space; the first water level detection component includes a first float valve and a first Hall sensor; the first float valve is provided with a first magnet, and the first float valve floats on a water surface in the first space to follow rise and fall of the water surface; the first Hall sensor is provided outside the first box body and is capable of forming a first sensing area; the first sensing area is located on a lifting path of the first float valve, so that the first Hall sensor is capable of sensing the first float valve when the first float valve enters the first sensing area.

In some embodiments of the pet water dispenser, the pet water dispenser further includes a second box body, where a second space is provided inside the second box body, and the water pump and the driving mechanism are both accommodated in the second space; a second hole is provided on a side wall of the second box body, and a part of the drinking basin passes through the second hole and is clamped to an inner wall of the first hole.

In some embodiments of the pet water dispenser, the pet water dispenser further includes a first positioning element, and the first positioning element is provided on the second box body, the first positioning element is capable of sensing the first box body and/or causing the first box body to connect to the second box body so as to locate a relative position of the first box body and the second box body;
when the first positioning element is inductive, the first positioning element is connected in communication with the driving component to restrict the driving component from starting when the first box body and the second box body are not in the relative position.

In some embodiments of the pet water dispenser, the pet water dispenser further includes a third box body, where a third space is provided inside the third box body, and the third space is configured to receive water poured out from the drinking basin.

In some embodiments of the pet water dispenser, the pet water dispenser further includes a second positioning element, and the second positioning element is provided on the second box body, the second positioning element is capable of sensing the third box body and/or causing the third box body to connect to the second box body so as to locate a relative position of the third box body and the second box body;
when the second positioning element is inductive, the second positioning element is connected in communication with the driving component to restrict the driving component from starting when the third box body and the second box body are not in the relative position.

In some embodiments of the pet water dispenser, the third box body includes a box body and a box body cover, the box body cover covers on a box body mouth of the box body, the box body and the box body cover form the third space, and the box body cover is funnel-shaped;
where the pet water dispenser further includes a second water level detection component, and the second water level detection component is configured to detect a water level in the third space; the second water level detection component includes a second float valve and a second Hall sensor; the second float valve is provided with a second magnet, and the second float valve floats on a water surface in the third space to follow rise and fall of the water surface; the second Hall sensor is provided outside the third box body and is capable of forming a second sensing area; the second sensing area is located on a lifting path of the second float valve, so that the second Hall sensor is capable of sensing the second float valve when the second float valve enters the second sensing area.

The implementation of the embodiment of this utility model will have at least the following beneficial effects.

The above-mentioned pet water dispenser has the effect of dumping the contaminated water in the drinking basin and replacing it with clean water. Specifically, this utility model can drive the drinking basin to rotate in the vertical direction through the driving mechanism. In this way, when the water in the drinking basin is contaminated into sewage, the pet water dispenser can start the driving mechanism to flip the drinking basin and pour out the sewage in the drinking basin. Then, the clean water is pumped out from the first box body and transferred to the drinking basin through the water pump, thereby achieving the pouring out of sewage and the pouring in of clean water, completing the water replacement, and solving a technical problem of separating clean water in the existing pet water dispensers.

### BRIEF DESCRIPTION OF DRAWINGS

In order to provide a clearer explanation of the embodiments of this utility model or the technical solutions in the prior art, a brief introduction will be given to the accompanying drawings required for the description of the embodiments or prior art. It is obvious that the accompanying drawings described below are only some embodiments of this utility model. For those skilled in the art, other drawings can be obtained based on these drawings without creative work.
FIG. 1 is a schematic diagram of an overall structure of a pet water dispenser in an embodiment.
FIG. 2 is a schematic diagram of an explosive structure of the pet water dispenser shown in FIG. 1.
FIG. 3 is a schematic diagram of a structural connection and an explosion structure between a driving mechanism and a drinking basin in FIG. 2.

Numeral reference: 1-first box body; 11-first space; 2-water pump; 3-drinking basin; 4-driving mechanism; 41-driving element; 42-rotating component; 421-first hole; 422-clamp connector; 43- position detection component; 431-sensing element; 432- first position detection element; 433-second position detection element; 44-bracket; 45-front shell; 46-rear shell; 47-reduction gear set; 5-first water level detection component; 51-first float valve; 52-first Hall sensor; 6-second box body; 61-second space; 62-second hole; 7-first positioning element; 8-third box body; 81-third space; 82-box body; 83-box cover; 9-second positioning element; 100-second water level detection component; 101-second float valve; 102-second Hall sensor; 200-main control board.

### DESCRIPTION OF EMBODIMENTS

In order to facilitate the understanding of this utility model, a more comprehensive description of this utility model will be provided below with reference to the relevant drawings. Preferred embodiment of this utility model is shown in the accompanying drawings. However, this utility model can be implemented in many other different forms and is not limited to the embodiments described in this specification. On the contrary, the purpose of providing these embodiments is to render the understanding of the disclosed content of this utility model more thorough and comprehensive.

It should be noted that when a component is referred to as "fixed to" another component, it can be directly on the other component or there can also be a centered component. When a component is considered to be "connected" to another component, it can be directly connected to another component or there may be a central component present at the same time. Terms "vertical", "horizontal", "left", "right", and similar expressions used in this specification are for illustrative purposes only.

Unless otherwise defined, all technical and scientific terms used in this specification have the same meanings as those commonly understood by those skilled in the art belonging to this utility model. Terms used in the specification of this utility model are only for the purpose of describing specific embodiments and are not intended to limit this utility model. Term "and/or" used in this specification include any and all combinations of one or more related listed items.

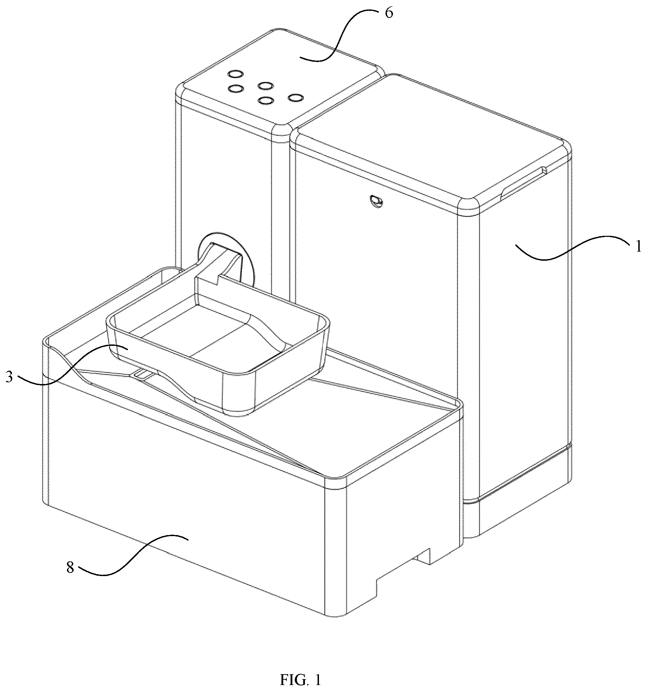

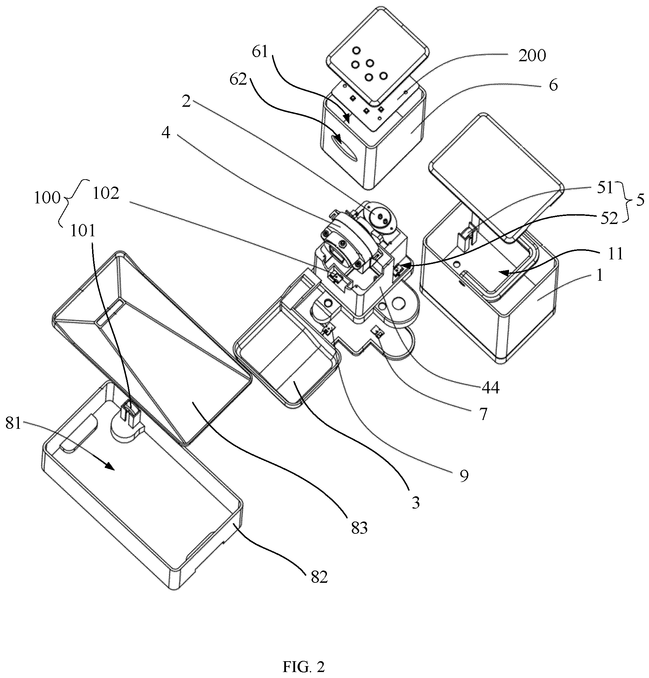

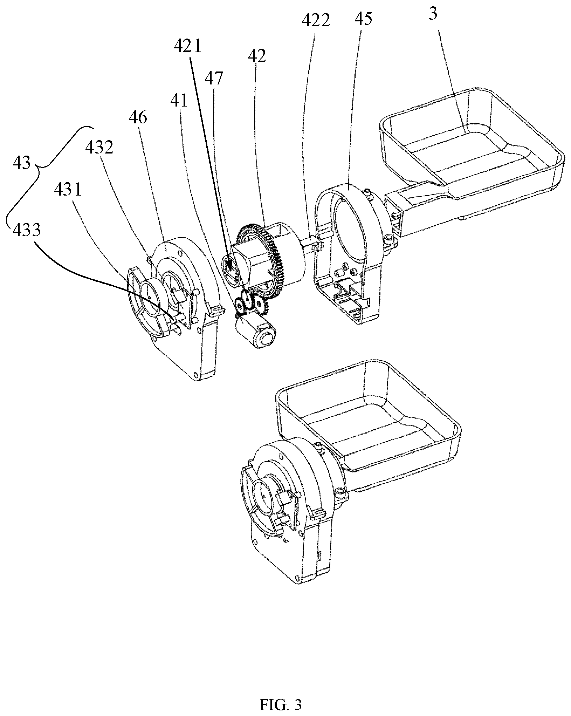

As shown in FIGs. 1-3, in an embodiment of a pet water dispenser, the pet water dispenser includes a first box body 1, a water pump 2, a drinking basin 3, and a driving mechanism 4. The first box body 1 is provided with a first space 11 capable of accommodating clean water. One end of the water pump 2 is communicated to the first space 11, and the other end thereof is communicated to the drinking basin 3. The water pump 2 is configured to pump water in the first space 11 into the drinking basin 3. The driving mechanism 4 is connected to the drinking basin 3, and the driving mechanism 4 is configured to drive the drinking basin 3 to rotate in a vertical direction so as to pour out the water in the drinking basin 3.

In this embodiment, the driving mechanism 4 can drive the drinking basin 3 to rotate in the vertical direction. In this way, when water in the drinking basin 3 is contaminated into sewage, the pet water dispenser can start the driving mechanism 4 to flip the drinking basin 3 and pour out the sewage in the drinking basin 3. Then, the clean water is pumped out from the first box body 1 and transferred to the drinking basin 3 through the water pump 2, thereby achieving the pouring out sewage and pouring in clean water, completing water exchange, and solving the technical problem of separating clean water from sewage in existing pet water dispensers.

It can be understood that water pump 2 has a pump inlet and a pump outlet. The pump inlet can be communicated to the first space 11 through a pipeline, and the pump outlet can also be communicated to the drinking basin 3 through a pipeline.

In an embodiment of the pet water dispenser, the driving mechanism 4 includes a driving element 41 and a rotating component 42. The driving element 41 is connected to the rotating component 42, and the driving element 41 is configured to drive the rotating component 42 to rotate so as to drive the drinking basin 3 to rotate in the vertical direction through the rotating component 42. A first hole 421 is provided at an axis of the rotating component 42 along an axis direction of the rotating component 42, and the drinking basin 3 is clamped to the rotating component 42 and communicated to the first hole 421. The water pump 2 is communicated to the first hole 421 so as to communicate to the drinking basin 3 through the first hole 421.

In this embodiment, by providing the first hole 421 on the rotating component 42, the pump outlet of the water pump 2 can be communicated to the drinking basin 3 through the first hole 421, thereby eliminating the pipeline connected to the pump outlet, rendering an overall structure more compact and reducing volume. Furthermore, since the first hole 421 is provided at the axis, a hole center position of the first hole 421 remains unchanged when the rotating component 42 is rotated. This allows the structure forming the pump outlet on the water pump 2 to extend into the first hole 421, thereby avoiding water flow outside the first hole 421 due to misalignment between the water pump 2 and the first hole 421.

It should be noted that as the position of the first hole 421 is on the axis, and the first hole 421 is penetrated, the axis of an output end of the driving element 41 cannot coincide with the axis of the rotating component 42, that is, it cannot be directly connected to the rotating component 42 through the driving element 41 of a motor. Specifically, the driving element 41 can be a motor, and a gear can be sleeved on the output end of the motor. A tooth shaped part is provided on an outer wall of the rotating component 42 away from the first hole 421. By meshing the gear and the tooth shaped part together, the driving element 41 can drive the rotating component 42 to rotate through a transmission effect of the gear. Of course, other methods such as belt transmission can also be used, which will not be repeated here.

Preferably, the driving mechanism 4 further includes a reduction gear set 47, and the driving element 41 is connected to the rotating component 42 through a transmission of the reduction gear set 47. By providing the reduction gear set 47, the speed of the motor can be reduced and transmitted to the rotating component 42.

In an embodiment of a pet water dispenser, the rotating component 42 has at least a first position corresponding to the drinking basin 3 that can accommodate water and a second position corresponding to the drinking basin 3 that can pour out water in a rotation path of the rotating component 42. The rotating component 42 can reciprocate between the first and second positions under a drive of the driving element 41. The driving mechanism 4 further includes a position detection component 43, and the position detection component 43 is connected in communication with the driving element 41 and can transmit a signal that the rotating component 42 has been rotated to the first and second positions to the driving element 41.

In this embodiment, it can be understood that a reciprocating motion of the drinking basin 3 between the first position and the second position requires forward and reverse rotation of the driving element 41. By providing the position detection component 43, the detected signal of the rotating component 42 that has been rotated to the first position and the second position can be transmitted to the driving element 41. In this way, when the driving element 41 receives the signal, it can change its state. For example, when the rotating component 42 is rotated from the first position to the second position, the position detection component 43 detects that the rotating component 42 has been located in the second position, and the driving element 41 can stop further driving the rotating component 42 to rotate. Then, the rotating component 42 can be rotated from the second position to the first position, and the position detection component 43 detects the rotating component 42 that has been located at the first position, and the driving element 41 stops driving, thereby avoiding rotating component 42 to rotate too much.

Preferably, a main control board 200 can be added; the water pump 2, the driving element 41, and the position detection component 43 can all be connected in communication to the main control board 200. By providing the main control board 200, it can receive signals and control opening and closing of the water pump 2 and driving element 41. For example, when the position detection component 43 detects that the rotating component 42 has been rotated from the second position to the first position, the main control board 200 can control the water pump 2 to pump the clean water from the first space 11 into the drinking basin 3, thereby improving the automation level.

Of course, it can also be controlled separately by the main control board 200. A user can use the main control board 200 to activate the driving element 41 to pour out the water in the drinking basin 3, then activate the driving element 41 to reset the drinking basin 3, and finally activate the water pump 2 to pump the water into the drinking basin 3.

It can be understood that current values when the water pump 2 pumps water and pump air are different. The current value when pumping air is smaller than that when pumping water. Therefore, when pumping air, the main control board 200 can receive a low current signal from the water pump 2 and issue a warning message, which can be set to prevent the driving mechanism 4 from starting.

In an embodiment of a pet water dispenser, the position detection component 43 includes a sensing element 431, a first position detection element 432, and a second position detection element 433. The sensing element 431 is connected to the rotating component 42 to be able to rotate with the rotating component 42. The sensing element 431 has at least a third position corresponding to the first position and a fourth position corresponding to the second position in its rotation path. The first position detection element 432 and the second position detection element 433 are both connected in communication with the driving element 41. The first position detection element 432 can detect that the sensing element 431 that has been located in the third position and transmits the signal of the sensing element 431 that has been located in the third position to the driving element 41. The second position detection element 433 can detect that the sensing element 431 that has been located in the fourth position and transmit the signal of the sensing element 431 that has been located in the fourth position to the driving element 41.

In this embodiment, the position detection component 43 includes the sensing element 431, the first position detection element 432, and the second position detection element 433. The sensing element 431 is configured to rotate together with the rotating component 42, so that there is a corresponding determined position, namely the third position and the fourth position, when the rotating component 42 is rotated to the first position and the second position. Then, the first position detection element 432 and the second position detection element 433 are used to detect the third position and the fourth position respectively to obtain the position of the rotating component 42. With this configuration, the position detection component 43 can be used as a whole without a need for structural design on the rotating component 42, which is convenient for processing, manufacturing, installation, and disassembly.

In one embodiment, both the first position detection element 432 and the second position detection element 433 can be photoelectric switches. The sensing element 431 is provided with a protrusion that can be inserted into the photoelectric switch. When the sensing element 431 is in the third position, the protrusion is inserted into the first position detection element 432. Similarly, when the sensing element 431 is in the fourth position, the protrusion is inserted into the second position detection element 433. In another embodiment, both the first position detection element 432 and the second position detection element 433 can be Hall sensors. A magnetic component is provided on the protruding of the sensing element 431, or the protruding itself is a magnetic component. Therefore, when the sensing element 431 is located in the third and fourth positions respectively, it will be detected by the first position detection element 432 and the second position detection element 433. Or one of the first position detection element 432 and the second position detection element 433 can be a photoelectric switch, the other can be a Hall sensor, or other forms of sensing or detection elements.

Specifically, the sensing element 431 can be a fan-shaped structural component, a ring is sleeved and fixed at a center of the rotating component 42. Under this structure, sharp corners on opposite sides of the sensing element 431 can serve as the protrusion.

In an embodiment of a pet water dispenser, the pet water dispenser further includes a first water level detection component 5, and the first water level detection component 5 is configured for detecting a water level in the first space 11.

In this embodiment, by providing the first water level detection component 5, it is possible to detect the water level inside the first box body 1. Therefore, when the water level in the first box body 1 drops to a warning line, an alarm can be triggered through light, sound, or other means to remind the user to refill the water in time.

Specifically, the first water level detection component 5 includes a first float valve 51 and a first Hall sensor 52. The first float valve 51 is provided with a first magnet and the first float valve 51 floats on a water surface in the first space 11 to follow rise and fall of the water surface. The first Hall sensor 52 is located outside the first box body 1 and can form a first sensing area. The first sensing area is located on a lifting path of the first float valve 51, so that the first Hall sensor 52 can sense the first float valve 51 when it enters the first sensing area. It can be understood that a height range corresponding to the first sensing area formed by the first Hall sensor 52 is the warning line.

Preferably, in order to prevent the first float valve 51 from drifting on the water surface and being unable to reach the first sensing area, a fence can be provided inside the first box body 1, thereby forming a space where the first float valve 51 can be raised and lowered.

In an embodiment of a pet water dispenser, the pet water dispenser further includes a second box body 6, and the second box body 6 is provided with a second space 61. The water pump 2 and the driving mechanism 4 are both accommodated in the second space 61. A second hole 62 is provided on a side wall of the second box body 6, and a part of the drinking basin 3 passes through the second hole 62 and is clamped to an inner wall of the first hole 421.

In this embodiment, both the water pump 2 and the driving mechanism 4 can be accommodated by providing the second box body 6, and the drinking basin 3 is provided externally, which can avoid raising and exposing the water pump 2 and the driving mechanism 4 to the outside, and avoid adverse effects of an external environment on the water pump 2 and the driving mechanism 4.

Preferably, the second box body 6 can serve as a main control box body, and the pet water dispenser further includes the aforementioned main control board 200. The main control board 200, the water pump 2, the driving mechanism 4, the position detection component 43, and the first Hall sensor 52 are all housed in the second space 61. Buttons on the main control board 200 are provided on an upper cover of the second box body 6. In one embodiment, the first Hall sensor 52 can also be connected in communication to the main control board 200, so that the main control board 200 centrally processes signals and issues alarm information. It should be noted that the first Hall sensor 52 detects the warning line, and at this time, the water pump 2 may not be pumping air. When the water level reaches the warning line, there may still be a small amount of clean water in the first box body 1.

In an embodiment of a pet water dispenser, the pet water dispenser further includes a first positioning element 7, and the first positioning element 7 is provided on the second box body 6. The first positioning element 7 can sense the first box body 1 and/or causing the first box body 1 to connect to the second box body 6 so as to position a relative position of the first box body 1 and the second box body 6. When the first positioning element 7 is inductive, the first positioning element 7 is connected in communication with the driving component to restrict the driving component from starting when the first box body 1 and the second box body 6 are not in relative positions.

In this embodiment, by providing the first positioning element 7, the relative position of the first box body 1 and the second box body 6 can be positioned, which can be used to ensure that the water pump 2 in the second box body 6 is communicated to the first space 11 in the first box body 1. Preferably, when the first box body 1 and the second box body 6 are in this relative position, it can be used as a prerequisite for starting the entire pet water dispenser.

Specifically, when the first positioning element 7 is inductive, the first positioning element 7 may include a Hall sensor and a magnetic component. The magnetic component is provided on an outer wall of the first box body 1, and the Hall sensor is provided on the second box body 6. Preferably, the Hall sensor is housed inside the second box body 6 and connected in communication to the main control board 200. When the first positioning element 7 is used to connect the first box body 1 and the second box body 6, the first positioning element 7 can be a clamping structure provided on the second box body 6. By providing the clamping structure, the first box body 1 and the second box body 6 can be clamped and connected. Preferably, a guiding structure can also be provided on the second box body 6 to guide the first box body 1 to move stably to the clamping structure, thereby determining the relative position. Furthermore, Hall sensors can also be provided on the above-mentioned clamp connection structure to sense the magnetic components on the corresponding structure of the first box body 1, thereby achieving a technical solution that is both inductive and can connect the first box body 1 and the second box body 6.

In an embodiment of a pet water dispenser, the pet water dispenser further includes a third box body 8, and the third box body 8 is provided with a third space 81, the third space 81 is configured for receiving water poured out from the drinking basin 3.

In this embodiment, by providing the third box body 8 to receive water poured out from the drinking basin 3, that is, the third box body 8 can be used as a sewage tank to receive sewage poured out from the drinking basin 3. This can further expand the application scenarios of the pet water dispenser in this embodiment, rendering it suitable for indoor use.

In an embodiment of a pet water dispenser, the pet water dispenser further includes a second positioning element 9, and the second positioning element 9 is provided on the second box body 6. The second positioning element 9 can sense the third box body 8 and/or causing the third box body 8 to connect to the second box body 6 to position a relative position of the third box body 8 and the second box body 6. When the second positioning element 9 is inductive, the second positioning element 9 is connected in communication with the driving component to restrict the driving component from starting when the third box body 8 and the second box body 6 are not in the relative position.

This embodiment can position the relative position between the third box body 8 and the second box body 6 by providing the second positioning element 9, which can be used to ensure that the third box body 8 can receive the sewage poured out from the drinking basin 3. Preferably, when the third box body 8 and the second box body 6 are in this relative position, it can be used as a prerequisite for starting the entire pet water dispenser.

Similarly, the second positioning element 9 can also be the same as the first positioning element 7 mentioned above, that is, it can be a combination of a Hall sensor and a magnetic component, a clamping structure or a combination of the clamping structure, the Hall sensor and the magnetic component.When it is only the combination of the Hall sensor and the magnetic component, the Hall sensor is preferably housed in the second box body 6.

In an embodiment of a pet water dispenser, the third box body 8 includes a box body 82 and a box cover 83. The box cover 83 can cover on a box mouth of the box body 82, the box body 82 and the box cover 83 form the third space 81. The box cover 83 is funnel-shaped. By setting the box cover 83 in a funnel shape, it can serve as a drainage effect, facilitating the flow of water from the drinking basin 3 into the third space 81 of the third box body 8.

In an embodiment of a pet water dispenser, the pet water dispenser further includes a second water level detection component 100, and the second water level detection component 100 is configured for detecting a water level in the third space 81.

In this embodiment, by providing the second water level detection component 100, it is possible to detect a water level inside the third box body 8. In this way, when the water level inside the third box body 8 rises to the warning line, it can alert the user to pour water in a timely manner through light, sound, and other means.

Specifically, the second water level detection component 100 includes a second float valve 101 and a second Hall sensor 102. The second float valve 101 is provided with a second magnet and floats on a water surface in the third space 81 to follow rise and fall of the water surface. The second Hall sensor 102 is provided outside the third box body 8 and can form a second sensing area. The second sensing area is located on a lifting path of the second float valve 101, so that the second Hall sensor 102 can sense the second float valve 101 when it enters the second sensing area.

Preferably, in order to prevent the second float valve 101 from drifting on the water surface and unable to reach the first sensing area, a fence can be provided inside the first box body 1, thereby forming a space where the first float valve 51 can be raised and lowered.

Based on the previous embodiments, it can be understood that the first box body 1 needs to be filled with water and cleaned, and the third box body 8 needs to be refilled, so it can be detachably connected to the second box body 6 or ensured in relative position through induction. Therefore, in order to ensure stable operation and ensure that both the first box body 1 and the third box body 8 are installed in place, it becomes a prerequisite for the operation of the pet water dispenser. Similarly, when the first Hall sensor 52 does not detect that the first float valve 51 or the water pump 2 is in a low current state where water cannot be drawn, and the second Hall sensor 102 does not detect the second float valve 101, it indicates that the clean water in the first box body 1 meets the requirements for the operation of the pet water dispenser, and an interior space is sufficient to meet the above four conditions, and the pet water dispenser can work normally. Where it is preferable to take whether the water pump 2 is in the low current state as a prerequisite, that is, when the water pump 2 is in the low current state, the pet water dispenser cannot start working.

Further specifically, the driving mechanism 4 may further include a bracket 44, a front shell 45, and a rear shell 46. The rotating component 42 penetrates the front shell 45 and the rear shell 46, the front shell 45 and the rear shell 46 can be fastened together and are provided on the bracket 44 to support the rotating component 42. The part of the drinking basin 3 is connected to the rotating component 42 after passing through the front shell 45, and the rotating component 42 is provided with a clamp connector 422 for clamping with the drinking basin 3. The clamp connector 422 can be provided on the inner wall of the first hole 421 and extend outside the first hole 421 along an axial direction of the first hole 421. Through the tactile sensation and sound when clamping with the drinking basin 3, feedback can be given that the drinking basin 3 and the clamp connector 422 have been clamped. The first position detection element 432 and the second position detection element 433 are both provided on the rear shell 46, and the sensing element 431 is located on one side of the rear shell 46 facing away from the front shell 45. Besides that, when both the first positioning element 7 and the second positioning element 9 are only inductive, two Hall sensors, as well as the first Hall sensor 52 and the second Hall sensor 102 can be installed on the bracket 44.

The various technical features of the above embodiments can be combined arbitrarily. In order to make the description concise, not all possible combinations of the various technical features in the above embodiments have been described. However, as long as there is no contradiction in the combination of these technical features, they should be considered within the scope of this specification.

The above embodiments only express several embodiments of this utility model, and their descriptions are more specific and detailed, but should not be understood as limiting the scope of the patent application. It should be noted that for those skilled in the art, several modifications and improvements can be made without departing from the concept of this utility model, which are within the protection scope of this utility model. Therefore, the protection scope of this utility model patent should be based on the attached claims.

## Claims

1. A pet water dispenser, comprising a first box body, a water pump, a drinking basin, and a driving mechanism;
wherein the first box body is provided with a first space configured to accommodate clean water; one end of the water pump is communicated to the first space, and the other end thereof is communicated to the drinking basin;
the water pump is configured to pump water in the first space into the drinking basin, the driving mechanism is connected to the drinking basin, and the driving mechanism is configured to drive the drinking basin to rotate in a vertical direction so as to pour out the water in the drinking basin;
the driving mechanism comprises a driving element and a rotating component, the driving element is connected to the rotating component, and the driving element is configured to drive the rotating component to rotate so as to drive the drinking basin to rotate in the vertical direction through the rotating component;
a first hole penetrating the rotating component is provided at an axis of the rotating component along an axis direction of the rotating component, and the drinking basin is clamped to the rotating component and communicated to the first hole;
the water pump is communicated to the first hole and communicated to the drinking basin through the first hole.

2. The pet water dispenser according to claim 1, wherein the rotating component has at least a first position corresponding to the water basin that is able to accommodate water and a second position corresponding to the water basin that is able to pour out water in a rotation path of the rotating component,
the rotating component is capable of being reciprocated between the first position and the second position under a drive of the driving element;
the driving mechanism further comprises a position detection component, and the position detection component is connected in communication with the driving element and is capable of transmitting a signal that the rotating component has been rotated to the first and second positions, to the driving element.

3. The pet water dispenser according to claim 2, wherein the position detection component comprises a sensing element, a first position detection element, and a second position detection element,
the sensing element is connected to the rotating component and is rotated with the rotating component, and the sensing element has at least a third position corresponding to the first position and a fourth position corresponding to the second position in the rotation path;
the first position detection element and the second position detection element are both connected in communication with the driving element;
the first position detection element is capable of detecting that the sensing element has been located at the third position and transmitting a signal indicating that the sensing element has been located at the third position to the driving element;
the second position detection element is capable of detecting that the sensing element is located at the fourth position and transmitting a signal indicating that the sensing element has been located at the fourth position to the driving element.

4. The pet water dispenser according to claim 1, further comprising a first water level detection component, and the first water level detection component is configured to detect a water level in the first space;
the first water level detection component comprises a first float valve and a first Hall sensor;
the first float valve is provided with a first magnet, and the first float valve floats on a water surface in the first space to follow rise and fall of the water surface;
the first Hall sensor is provided outside the first box body and is capable of forming a first sensing area;
the first sensing area is located on a lifting path of the first float valve, so that the first Hall sensor is capable of sensing the first float valve when the first float valve enters the first sensing area.

5. The pet water dispenser according to claim 1, wherein the pet water dispenser further comprises a second box body,
wherein a second space is provided inside the second box body, and the water pump and the driving mechanism are both accommodated in the second space;
a second hole is provided on a side wall of the second box body, and a part of the drinking basin passes through the second hole and is clamped to an inner wall of the first hole.

6. The pet water dispenser according to claim 5, wherein the pet water dispenser further comprises a first positioning element, and the first positioning element is provided on the second box body,
the first positioning element is capable of sensing the first box body and/or causing the first box body to connect to the second box body so as to locate a relative position of the first box body and the second box body;
when the first positioning element is inductive, the first positioning element is connected in communication with the driving component to restrict the driving component from starting when the first box body and the second box body are not in the relative position.

7. The pet water dispenser according to claim 5, wherein the pet water dispenser further comprises a third box body, wherein a third space is provided inside the third box body, and the third space is configured to receive water poured out from the drinking basin.

8. The pet water dispenser according to claim 7, wherein the pet water dispenser further comprises a second positioning element, and the second positioning element is provided on the second box body,
the second positioning element is capable of sensing the third box body and/or causing the third box body to connect to the second box body so as to locate a relative position of the third box body and the second box body;
when the second positioning element is inductive, the second positioning element is connected in communication with the driving component to restrict the driving component from starting when the third box body and the second box body are not in the relative position.

9. The pet water dispenser according to claim 8, wherein the third box body comprises a box body and a box body cover,
the box body cover covers on a box body mouth of the box body, the box body and the box body cover form the third space, and the box body cover is funnel-shaped;
wherein the pet water dispenser further comprises a second water level detection component, and the second water level detection component is configured to detect a water level in the third space;
the second water level detection component comprises a second float valve and a second Hall sensor,
the second float valve is provided with a second magnet, and the second float valve floats on a water surface in the third space to follow rise and fall of the water surface;
the second Hall sensor is provided outside the third box body and is capable of forming a second sensing area;
the second sensing area is located on a lifting path of the second float valve, so that the second Hall sensor is capable of sensing the second float valve when the second float valve enters the second sensing area.
